# EUROPEAN PATENT SPECIFICATION

(11) **EP 4 596 261 B1**
(45) Date of publication and mention of the grant of the patent: **25.11.2026**
(21) Application number: 25150323.1
(22) Date of filing: 06.01.2025
(51) Int. Cl.: B60C 13/00, B60C 15/06

(54) **MOTORCYCLE TIRE**
MOTORRADREIFEN
PNEU DE MOTOCYCLETTE

(30) Priority: 30.01.2024 JP 2024012168
(43) Date of publication of application: 06.08.2025
(73) Proprietor: SUMITOMO RUBBER INDUSTRIES, LTD., Kobe-shi, Hyogo 651-0072 (JP)
(72) Inventor: MATSUURA, Kota, KOBE-SHI, 651-0072 (JP)
(74) Representative: Plasseraud IP

(56) References cited:
- EP-A1- 4 108 473
- EP-A1- 4 434 774
- EP-B1- 0 323 519
- EP-B1- 1 864 828
- EP-B1- 3 769 974

## Description

### RELATED APPLICATIONS

This application claims the benefit of foreign priority to Japanese Patent Applications No. JP2024-012168, filed January 30, 2024.

### FIELD OF THE INVENTION

The present invention relates to a motorcycle tire.

### BACKGROUND OF THE INVENITON

Japanese unexamined patent application publication No. 2017-074834 describes a pneumatic tire having an insulation disposed between a carcass and an inner liner. The insulation is arranged at least in sidewall portions.

EP 4 108 473 relates to a motorcycle tire, EP 1 864 828 discloses a pneumatic radial tire for motorcycle, EP 0 323 519 relates to a pneumatic tire and EP 3 769 974 describes a heavy duty pneumatic tire. EP 4 434 774 A1 is prior art according to Art. 54(3) EPC, it relates to a motorcycle tire and claims 2023-03-20 as priority date of JP2023044371A and was published after the present application date on 2024-09-25.

### SUMMARY OF THE INVENTION

Tires as described above are said to have a significantly increased rigidity in the sidewall portions, and thus are considered to have an excellent rigid impression during running. In recent years, there has been a demand for improving vibration absorbing performance in motorcycle tires while maintaining a high rigid impression during running.

The present invention was made in view of the above, and a primary object thereof is to provide a motorcycle tire capable of improving steering stability performance by improving the vibration absorbing performance while maintaining the high rigid impression during running.

The present invention is a motorcycle tire including:
a tread portion;
a pair of tread edges defining the tread portion;
a pair of sidewall portions each extending radially inward from the respective axial side of the tread portion;
a pair of bead portions each provided radially inside a respective one of the sidewall portions;
a pair of bead cores each embedded in a respective one of the bead portions;
a carcass including a carcass ply having a main body portion extending between the bead cores in a toroidal manner;
an inner liner layer arranged on a tire inner cavity side of the carcass; and
insulation rubber layers each disposed between the main body portion and the inner liner layer in a respective one of the sidewall portions, wherein
each of the insulation rubber layers has a first end on the tread portion side and extends from the first end at least to a respective one of the bead cores,
in a standard state in which the motorcycle tire is mounted on a standard rim, inflated to a standard inner pressure, and loaded with no tire load, each of the sidewall portions includes a tire outer surface and an outermost end in the tire radial direction of an area where the tire outer surface contacts with the standard rim,
in a tire meridian cross-section of the motorcycle tire in the standard state, the tire outer surface of each of the sidewall portions has a side profile occupying 90% or more of a length from the respective one of the tread edges,
the length is a distance in the tire radial direction in each axial half of the motorcycle tire between a respective one of the tread edges and the respective outermost end, and
the side profile is a linear line or an arc concave axially inward and having a radius of curvature of 55 mm or more,
wherein in each of the sidewall portions, the first end of the insulation rubber layer is positioned radially outside a center position in the tire radial direction of the side profile,
wherein
in the tire meridian cross-section of the motorcycle tire in the standard state, the tread portion has a tire outer surface including a tread profile convex radially outward in an arc shape,
the tread profile includes a first portion extending between outer ground contact positions,
the outer ground contact positions are the outermost contact positions in the tire axial direction when the motorcycle tire in the standard state is loaded with a standard tire load and is in contact with a plane with a camber angle of 30 degrees on each tread edge side, and
the first portion has a radius of curvature r3 from 40 to 60 mm,
wherein
the tread profile includes a pair of second portions each extending between a respective one of the outer ground contact positions and a respective one of the tread edges, and
each of the second portions has a radius of curvature r4 from 70 to 100 mm.

It is possible that the motorcycle tire of the present invention improves the steering stability performance by increasing the vibration absorbing performance while maintaining the rigid impression during running at a high level by adopting the above-described configuration.

### BRIEF DESCRIPTION OF THE DRAWINGS

FIG. 1 is a tire meridian cross-section of a motorcycle tire 1 according to one embodiment of the present invention.
FIG. 2 is another tire meridian cross-section of the motorcycle tire 1.
FIG. 3 is an enlarged view of one of sidewall portions of the tire 1 of FIG. 1.
FIG. 4 is an enlarged view of one of sidewall portions of a motorcycle tire according to another embodiment of the present invention.

### DETAILED DESCRIPTION OF THE INVENTION

Embodiments of the present invention will now be described in conjunction with accompanying drawings. The drawings may contain exaggerations and representations that differ from the actual dimensional ratios of the structures in order to aid in the understanding of the present invention.

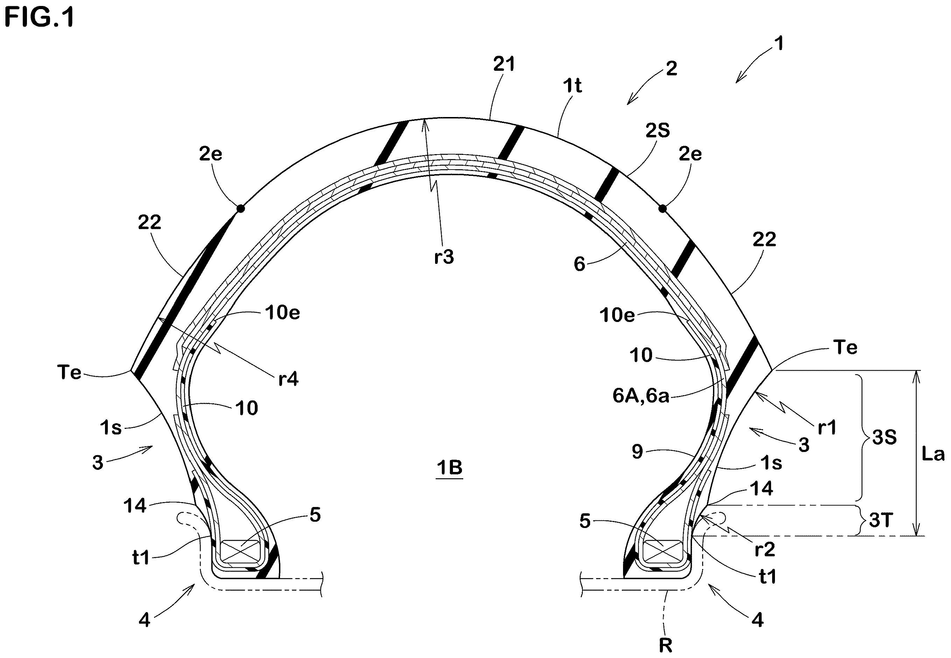

FIG. 1 is a tire meridian cross-section passing all through a tire rotational axis (not shown) of a motorcycle tire 1 (hereinafter, may sometimes be simply referred to as a "tire 1") according to an embodiment of the present invention in a standard state. It is preferred that the tire 1 in the present embodiment is mounted on motorcycles suitable for on-road sports driving.

The dimensions and the like of various parts of the tire 1 are those measured in the standard state unless noted otherwise in the present specification. The term "standard state" refers to a state in which the tire 1 is mounted on a standard rim (a standard rim (R) in the present embodiment), inflated to a standard inner pressure, and loaded with no tire load.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, the maximum value listed in the "TIRE LOAD LIMITS AT VARIOUS COLD INFLATION PRESSURES" table in TRA, and "INFLATION PRESSURE" in ETRTO.

The tire 1 in the present embodiment includes a tread portion 2 having a pair of tread edges (Te) which are axially outermost edges on both sides of the tread portion so as to define the tread portion, a pair of sidewall portions 3 each extending radially inward from the tread portion 2 on a respective axial side thereof, and a pair of bead portions 4 each provided radially inward of a respective one of the sidewall portions 3. Each of the bead portions 4 is provided with a bead core 5. The tread edges (Te) correspond to edges of a tire outer surface (1t) of the tread portion 2 and are the edges of the area that contacts the road surface when cornering at the maximum camber angle.

The tire 1 includes a carcass 6 and an inner liner layer 9 disposed on a tire inner cavity (1B) side of the carcass 6, i.e., the inner liner layer 9 is arranged closer to the tire inner cavity (1B) than the carcass 6 is. The carcass 6 includes a carcass ply 6A having a main body portion (6a) extending in a toroidal manner between the pair of the bead cores 5. The tire 1 further includes insulation rubber layers 10 each disposed between the main body portion (6a) and the inner liner layer 9 in a respective one of the sidewall portions 3.

Each of the insulation rubber layers 10 has a first end (10e) on the tread portion 2 side and extends from the first end (10e) to at least a respective one of the bead cores 5. It is possible that the insulation rubber layers 10 configured as such increase the rigidity of the sidewall portions 3.

Each of the sidewall portions 3 has a tire outer surface (1s) and the tire outer surface (1s) includes an outermost end (t1) in the tire radial direction of an area where tire outer surface (1s) contacts with the standard rim (R) in the standard state.

In each axial half of the tire meridian cross-section of the tire 1 in the standard state, the tire outer surface (1s) of the sidewall portion 3 has a side profile 3S occupying 90% or more of a length (La) in the tire radial direction between the tread edge (Te) and the outermost end (t1) from the tread edge (Te). The side profile 3S is an arc having a radius of curvature (r1) of 55 mm or more and convex inward in the tire axial direction. The sidewall portions 3 having the side profiles 3S configured as such ensure a sufficient stroke amount for bending throughout the entire sidewall portions 3, and thus can absorb vibrations during running throughout the entire sidewall portions 3, thereby, the vibration absorbing performance is improved. Therefore, the motorcycle tire of the present invention has excellent steering stability performance. It should be noted that the same effect can be obtained even if the side profile 3S is configured as a straight line (with the radius of curvature (r1) being infinite), but the radius of curvature (r1) of the side profile 3S is preferably 300 mm or less, and preferably 60 mm or more.

Further, the tire outer surfaces (1s) of each of the sidewall portions 3 has a sub side profile 3T occupying 5% or more of the length (La) in the tire radial direction from the outermost end (t1). The sub side profile 3T is formed as an arc convex inward in the tire axial direction. The sub side profiles 3T configured as such help to absorb vibrations during running throughout the entire sidewall portions 3. A radius of curvature (r2) of the sub side profile 3T is preferably 10.0 mm or more, and more preferably 12.0 mm or more, for example. The radius of curvature (r2) is preferably 17.0 mm or less, and more preferably 15.0 mm or less, for example. Each of the sub side profiles 3T and the side profiles 3S is formed by an arc with a single radius of curvature, for example.

The tire outer surface (1s) of each of the sidewall portions 3 in the present embodiment includes an apex portion 14 connecting the side profile 3S and the sub side profile 3T. The apex portion 14 protrudes axially outward. The apex portion 14 may be formed as a so-called rim line which is provided so that it can be visually determined whether the tire 1 and the standard rim (R) are properly assembled during rim assembly, for example. The apex portion 14 in the present embodiment extends continuously in the tire circumferential direction. The apex portion 14 in the present embodiment is formed as a vertex. Apex portion 14 is not limited to such a manner.

The tire outer surface (1t) of the tread portion 2 includes a tread profile 2S that is convex radially outward in an arc shape in the tire meridian cross-section of the tire 1 in the standard state.

The tread profile 2S includes a pair of outer ground contact positions (2e). The outer ground contact positions (2e) are the outermost contact positions in the tire axial direction when the tire 1 in the standard state is loaded with a standard tire load and is in contact with a plane with a camber angle of 30 degrees on each tread edge (Te) side. In addition, the tread profile 2S also includes a first portion 21 extending between the outer ground contact positions (2e) and a pair of second portions 22 each extending between a respective one of the outer ground contact positions (2e) and a respective one of the tread edges (Te). The first portion 21 is the portion that comes into contact with the ground during straightaway driving and cornering with a large turning radius. A relatively small lateral force acts on the first portion 21 configured as such. Further, the second portions 22 are portions that come into contact with the road surface during cornering with a small turning radius, where at least one of the tread edges (Te) comes into contact with the road surface at a camber angle in the range of more than 30 degrees to about 45 degrees. A relatively large lateral force acts on the second portions 22 configured as such.

The term "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

It is preferred that the first portion 21, on which relatively small lateral forces act, has a decreased width of the ground contact surface (not shown) in order to absorb vibration during running by utilizing the flexure of the tread portion 2. Conversely, it is preferred that each of the second portions 22 has an increased width of the ground contact surface in order to improve the steering stability performance through stable cornering. For this reason, it is preferred that the second portions 22 has a radius of curvature (r4) larger than a radius of curvature (r3) of the first portions 21 in the tread profile 2S. In order to improve the steering stability performance from straightaway driving to cornering with a small turning radius, in tread profile 2S, the radius of curvature (r3) of the first portion 21 is preferably 40 mm or more, more preferably 45 mm or more, preferably 60 mm or less, and more preferably 55 mm or less. Further, in the tread profile 2S, the radius of curvature (r4) of each of the second portions 22 is preferably 70 mm or more, more preferably 75 mm or more, preferably 100 mm or less, and more preferably 95 mm or less.

If a difference (r4-r3) between the radius of curvature (r3) of the first portion 21 and the radius of curvature (r4) of each of the second portions 22 is excessively large, steering responsiveness and transient characteristic may deteriorate near the outer ground contact positions (2e) during cornering. Therefore, the difference (r4-r3) is preferably 10.0 mm or more, more preferably 20.0 mm or more, preferably 50.0 mm or less, and more preferably 40.0 mm or less.

Although not particularly limited, in order to manufacture the tire 1 configured as such, in a mold (not shown) for molding the tread profile 2S, the radius of curvature of the molding surface for molding the first portion 21 is preferably from 40 to 60 mm, and the radius of curvature of the molding surfaces for molding the second portions 22 is preferably from 90 to 110 mm. Further, in a mold (not shown) for molding the side profile 3S, the radius of curvature of the molding surface for molding the side profile 3S is preferably from 50 to 60 mm. Furthermore, in a mold (not shown) for molding each of the sub side profiles 3T, the radius of curvature of the molding surface for molding each of the sub side profiles 3T is preferably from 10 to 15 mm.

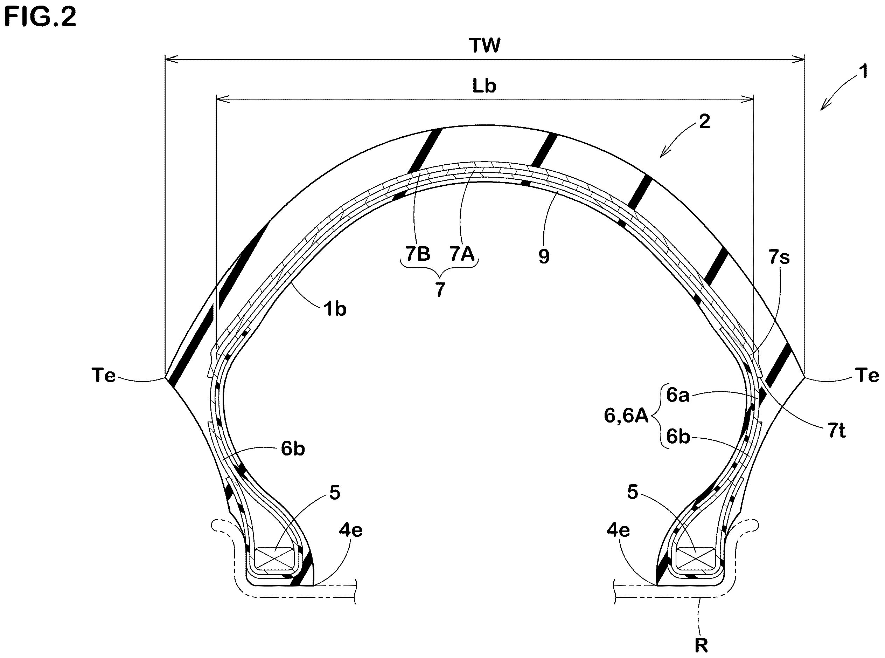

FIG. 2 is a tire meridian cross-section of the tire 1. As shown in FIG. 2, the carcass 6 of the present embodiment is formed of one carcass ply 6A. The carcass ply 6A includes a pair of turned up portions (6b) each connected to the main body portion (6a) on a respective axial side thereof and turned up around a respective one of the bead cores 5 from the inside to the outside in the tire axial direction so as to further extend outward in the tire radial direction, for example.

The tire 1 also includes a belt layer 7 in the tread portion 2. The belt layer 7 is disposed radially outside the carcass 6. The belt layer 7 includes at least one belt ply, and in the present embodiment, includes two belt plies 7A and 7B arranged on the inner and outer sides in the tire radial direction. The inner belt ply 7A is adjacent to the carcass 6 on the radially outer side thereof, for example. Each of the belt plies 7A and 7B and the carcass ply 6A includes cords and a topping rubber (not shown), and are made of a well-known constituent material, for example.

The inner belt ply 7A has outer edges (7s) in the tire axial direction each of which located axially inside a respective one of outer edges (7t) in the tire axial direction of the outer belt ply 7B. A length (Lb) in the tire axial direction of the inner belt ply 7A is preferably 75% or more, more preferably 80% or more of a tread width TW, and is preferably 90% or less, and more preferably 85% or less of the tread width TW. The tread width TW is the axial length between the tread edges (Te).

The inner liner layer 9 has excellent air shielding properties. The inner liner layer 9 maintains the internal pressure of the tire 1. The inner liner layer 9 is formed from a well-known rubber material. The inner liner layer 9 in the present embodiment extends between bead toes (4e) of the bead portions 4 to form a tire inner cavity surface (1b). In the present specification, the bead toes (4e) are the axially innermost points that contact the standard rim (R).

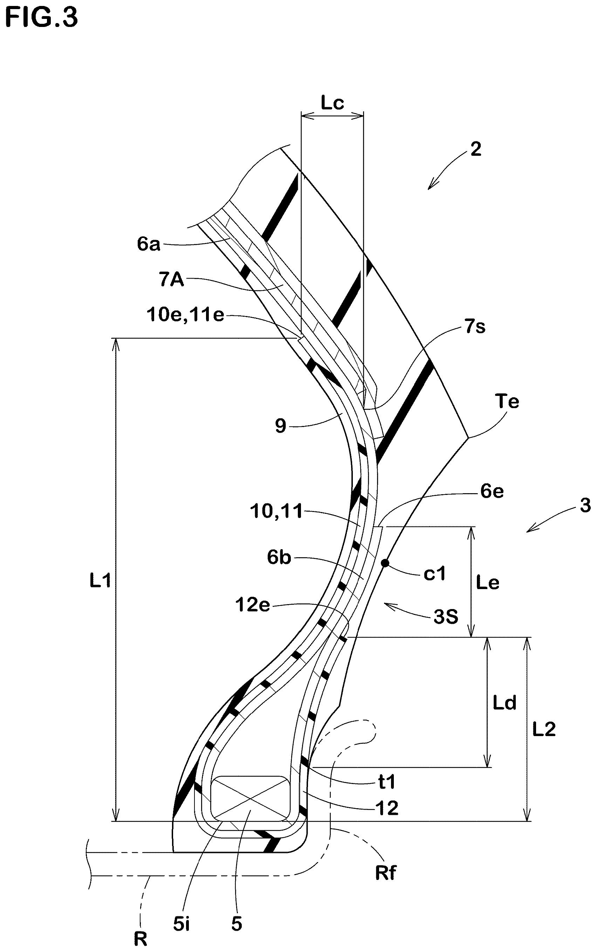

FIG. 3 is an enlarged view of one of the sidewall portions 3 of the tire 1 of FIG. 1. As shown in FIG. 3, in each axial half of the tire 1, it is preferred that the first end (10e) of the insulation rubber layer 10 is positioned radially outside a center position (c1) in the tire radial direction of the side profile 3S. The insulation rubber layers 10 configured as such effectively increase the rigidity of the sidewall portions 3.

The first ends (10e) are located in the tread portion 2, for example. In each axial half of the tire 1, the first end (10e) is located axially inside and radially outside the outer edge (7s) of the inner belt ply 7A in the present embodiment. Therefore, each of the first ends (10e) is separated from a respective one of the sidewall portions 3 where the flexure during running is relatively large, thereby, it is possible that the rigid impression is further improved. Although not particularly limited, a separation distance (Lc) in the tire axial direction between the first end (10e) and the outer edge (7s) of the inner belt ply 7A in each axial half of the tire 1 is preferably 1% or more, more preferably 5% or more of the tread width TW, preferably 20% or less, and more preferably 15% or less of the tread width TW.

Each of the insulation rubber layers 10 includes an inner portion 11 and an outer portion 12. In each axial half of the tire 1, the inner portion 11 extends in the tire radial direction on the axially inner side of the bead core 5. The inner portion 11 is arranged between the main body portion (6a) and the inner liner layer 9 in each axial half of the tire 1. The inner portions 11 configured as such undergo compressive deformation during running and apply a tensile force to the cords of the main body portions (6a), which helps to increase the rigidity of the sidewall portions 3 and improve the steering stability performance. In addition, the inner portions 11 configured as such act like dampers to the load during running, thereby, the vibration absorbing performance is improved. In each axial half of the tire 1, the outer portion 12 is connected to the inner portion 11 and turned around the bead core 5 from the inside to the outside in the tire axial direction so as to further extend outward in the tire radial direction. The outer portion 12 is disposed axially outside the turned up portion (6b) in each axial half of the tire 1 in the present embodiment.

A length L1 in the tire radial direction of the inner portion 11 is larger than a length L2 in the tire radial direction of the outer portion 12 in each of the insulation rubber layers 10. As a result, the outer portions 12 prevent excessive increase in the rigidity of the tire, thereby, vibrations during running are suppressed, therefore, the vibration absorbing performance is maintained high. Further, the areas where the inner portions 11 are located are farther away from a flange (Rf) of the standard rim (R) than the areas where the outer portions 12 are located, and therefore are areas where greater deflection occurs during running. In this way, the inner portions 11 having the relatively large lengths L2 are disposed in the areas where large deflection occurs, therefore, the deflection of the tire 1 during running is effectively suppressed, thereby, the steering stability performance is improved. In the present specification, each of the lengths L1 of the inner portions 11 and the lengths L2 of the outer portions 12 is the length from an inner end (5i) of the respective bead core 5 in the tire radial direction. In the present embodiment, an outer end (11e) of the inner portion 11 is the first end (10e) in each axial half of the tire 1.

In each axial half of the tire 1, an outer end (12e) in the tire radial direction of the outer portion 12 is located radially outside the outermost end (t1). The outermost end (t1) is the end where the rigidity of the bead portion 4 changes significantly in the tire radial direction. By providing the outer end (12e) radially outside the outermost end (t1), it is possible that the changes in the rigidity of the bead portions 4 are suppressed, therefore, it is possible that the vibration absorbing performance is maintained high. From the point of view of achieving both the vibration absorbing performance and the rigid impression of the tire 1, a separation distance (Ld) in the tire radial direction between the outer end (12e) of the outer portion 12 and the outermost end (t1) is preferably 10.0 mm or more, more preferably 20.0 mm or more, preferably 60.0 mm or less, and more preferably 50.0 mm or less, for example.

The outer end (12e) of the outer portion 12 is located radially inside an outer end (6e) in the tire radial direction of the turned up portion (6b) in each axial half of the tire 1, for example. As a result, in each axial half of the tire 1, the outer end (6e) of the turned up portion (6b) and the outer end (12e) of the outer portion 12 are misaligned in the tire radial direction, therefore, it is possible that the changes in the rigidity of the sidewall portions 3 are decreased, thereby, it is possible that the deflection during running is decreased. In order to achieve both cornering performance and the vibration absorbing performance, a separation distance (Le) in the tire radial direction between the outer end (12e) of the outer portion 12 and the outer end (6e) of the turned up portion (6b) is preferably 5.0 mm or more, more preferably 10.0 mm or more, preferably 30.0 mm or less, and more preferably 25.0 mm or less in each axial half of the tire 1, for example.

The insulation rubber layers 10 configured as such are formed from the following rubber composition. The loss tangent tanδ of the rubber composition at 70 degrees Celsius is preferably 0.06 or more, more preferably 0.2 or more, and is preferably 1.5 or less, and further preferably 1.0 or less. Since the loss tangent tanδ is 0.06 or more, the vibration absorbing effect can be maintained at a high level. Since the loss tangent tanδ is 1.5 or less, the decrease in the rigidity due to heat generation can be suppressed, therefore, it is possible that the cornering performance is improved. Further, the rubber hardness at 23 degrees Celsius of the rubber composition is preferably 65 degrees or more, more preferably 70 degrees or more, and is preferably 85 degrees or less, and more preferably 80 degrees or less. Since the rubber hardness is 65 degrees or more, the rigidity of the tire 1 is ensured, thereby, it is possible that the cornering performance is improved. Since the rubber hardness is 85 degrees or less, it is possible that the vibration absorbing effect is maintained at a high level. Furthermore, the breaking elongation at 23 degrees Celsius of the rubber composition is preferably 200% or more, and more preferably 350% or more. Since the breaking elongation is 200% or more, deformation of the sidewall portions 3 and the bead portions 4 is suppressed, thereby, it is possible that the cornering performance is improved. If the breaking elongation is too large, the vibration absorbing performance may be decreased. For this reason, the breaking elongation is preferably 550% or less, and more preferably 500% or less.

In the present specification, the "loss tangent tanδ" is a value measured by using a viscoelasticity spectrometer ("IPLEXER series" manufactured by GABO QUALIMETER Testanlagen GmbH) in accordance with the provisions of Japanese Industrial Standards JIS-K6394 under the following conditions.
Initial strain: 10%
Amplitude: ±1%
Frequency: 10Hz
Deformation mode: Tensile
Measurement temperature: 70 degrees Celsius

Further, in the present specification, the "rubber hardness" refers to a hardness measured in accordance with Japanese Industrial Standards JIS-K6253 by using a type-A durometer at a standard temperature of 23 degrees Celsius ± 2 degrees Celsius.

Furthermore, in the present specification, the "breaking elongation" can be measured, for example, in accordance with "Vulcanized Rubber and Thermoplastic Rubber - Determination of Tensile Properties" of Japanese Industrial Standards JIS K6251.

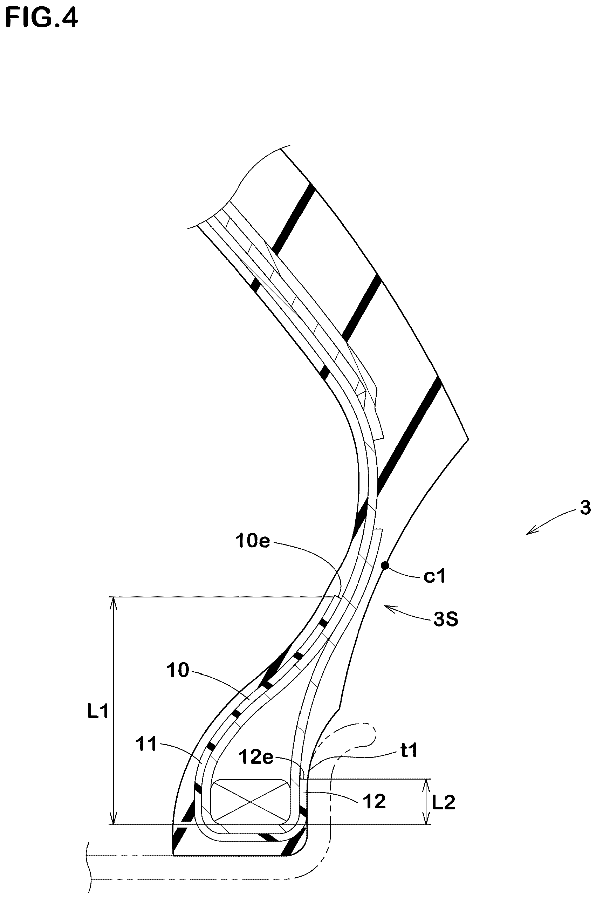

FIG. 4 is a tire meridian cross-section of one of the sidewall portions 3 according to another embodiment. As shown in FIG. 4, the first end (10e) of the insulation rubber layer 10 is provided within the side profile 3S in each axial half of the tire 1 in the present embodiment. The first end (10e) is located radially inward of the center position (c1) of the side profile 3S in the tire radial direction, for example. Further, the length L1 in the tire radial direction of the inner portion 11 is configured to be greater than the length L2 in the tire radial direction of the outer portion 12. Furthermore, the outer end (12e) in the tire radial direction of the outer portion 12 is located radially inside the outermost end (t1). The insulation rubber layers 10 configured as such decrease the mass of the tire 1, which improves the cornering performance while maintaining the rigid impression.

While detailed description has been made of the tire according to especially preferred embodiments of the present invention, the present invention can be embodied in various forms as claimed.

### [Examples]

Motorcycle tires having the basic structure of FIG. 1 were made by way of test according to the specifications listed in Table 1. Each of the test tires was tested for the rigid impression and the vibration absorbing performance. The test methods were as follows.

### < Rigid Impression and Vibration Absorbing Performance >

The test tires were mounted on a motorcycle having a displacement of 250 cc under the following conditions. A test rider drove the above-mentioned vehicle on a test course with a dry asphalt road surface. During the above driving, the test rider evaluated the rigid impression regarding stability during straightaway driving and the absorption of vibrations that occur when going over gaps and the like for each of the test tires based on the driver's sensory perception. The test results are indicated by an evaluation point based on Example 1 being 10, wherein the larger numerical value is better.
Tire: 90/80R17 (front wheel), 120/70R17 (rear wheel)
Tire inner pressure: 220 kPa (front wheel), 200 kPa (rear wheel)
The test results are shown in Table 1.

In Table 1, the lengths L1 in Example 2 and Reference 2 are the same length as the length L2 in Example 1, and the lengths L2 in Example 2 and Reference 2 are the same length as the length L1 in Example 1.

**Table 1**

| | | Ref. 1 | Ref. 2 | Ex. 1 | Ex. 2 |
|---|---|---|---|---|---|
| Presence or Absence of Insulation rubber layer | | Absence | Presence | Presence | Presence |
| Radius of Curvature (r1) | [mm] | 50 | 50 | 58 | 58 |
| Radius of Curvature (r3) | [mm] | 70 | 70 | 50 | 70 |
| Radius of Curvature (r4) | [mm] | 60 | 60 | 80 | 60 |
| Relationship of Lengths L1 and L2 | | - | L1 < L2 | L1 > L2 | L1 < L2 |
| Loss tangent tanδ of Insulation rubber layer | | - | 1.3 | 1.3 | 1.3 |
| Rubber hardness of Insulation rubber layer | [degree] | - | 75 | 75 | 75 |
| Rigid impression | [evaluation point: Larger is better] | 5 | 7 | 10 | 8 |
| Vibration absorbing performance | [evaluation point: Larger is better] | 5 | 6 | 10 | 7 |

As shown in Table 1, it can be seen that the tires in the Examples are better in the rigid impression and the vibration absorbing performance and are superior in the steering stability performance compared to the tires in the References.

### [Statement of Invention]

The present invention is defined by the claims.

### [Description of Reference Signs ]

- 1: motorcycle tire
- 2: tread portion
- 3: sidewall portion
- 1s: tire outer surface
- 3S: side profile
- 5: bead core
- 6A: carcass ply
- 6a: main body portion
- 9: inner liner layer
- 10: insulation rubber layer
- 10e: first end
- R: standard rim
- t1: outermost end
- Te: tread edge

## Claims

1. A motorcycle tire (1) comprising:
a tread portion (2);
a pair of tread edges (Te) defining the tread portion (2);
a pair of sidewall portions (3) each extending radially inward from the respective axial side of the tread portion (2);
a pair of bead portions (4) each provided radially inside a respective one of the sidewall portions (3);
a pair of bead cores (5) each embedded in a respective one of the bead portions (4);
a carcass (6) including a carcass ply (6A) having a main body portion (6a) extending between the bead cores (5) in a toroidal manner;
an inner liner layer (9) arranged on a tire inner cavity side of the carcass (6); and
insulation rubber layers (10) each disposed between the main body portion (6a) and the inner liner layer (9) in a respective one of the sidewall portions (3), wherein
each of the insulation rubber layers (10) has a first end (10e) on the tread portion side and extends from the first end (10e) at least to a respective one of the bead cores (5),
in a standard state in which the motorcycle tire (1) is mounted on a standard rim, inflated to a standard inner pressure, and loaded with no tire load, each of the sidewall portions (3) includes a tire outer surface (1s) and an outermost end (t1) in the tire radial direction of an area where the tire outer surface (1s) contacts with the standard rim (R),
in a tire meridian cross-section of the motorcycle tire (1) in the standard state, the tire outer surface (1s) of each of the sidewall portions (3) has a side profile (3S) occupying 90% or more of a length from the respective one of the tread edges (Te),
the length is a distance in the tire radial direction in each axial half of the motorcycle tire (1) between a respective one of the tread edges (Te) and the respective outermost end (t1), and
the side profile (3S) is a linear line or an arc concave axially inward and having a radius of curvature of 55 mm or more,
wherein in each of the sidewall portions (3), the first end (10e) of the insulation rubber layer (10) is positioned radially outside a center position in the tire radial direction of the side profile (3S), wherein
in the tire meridian cross-section of the motorcycle tire (1) in the standard state, the tread portion (2) has a tire outer surface (1s) including a tread profile (2S) convex radially outward in an arc shape,
the tread profile (2S) includes a first portion (21) extending between outer ground contact positions (2e),
the outer ground contact positions (2e) are the outermost contact positions in the tire axial direction when the motorcycle tire (1) in the standard state is loaded with a standard tire load and is in contact with a plane with a camber angle of 30 degrees on each tread edge side, and
the first portion (21) has a radius of curvature r3 from 40 to 60 mm, **characterized in that**
the tread profile (2S) includes a pair of second portions (22) each extending between a respective one of the outer ground contact positions (2e) and a respective one of the tread edges (Te), and
each of the second portions (22) has a radius of curvature r4 from 70 to 100 mm.

2. The motorcycle tire (1) according to claim 1, wherein the first end (21) of each of the insulation rubber layers (10) is located in the tread portion (2).

3. The motorcycle tire (1) according to any one of claims 1 and 2, wherein
each of the insulation rubber layers (10) includes an inner portion (11) and an outer portion (12),
the inner portion (11) is arranged between the main body portion (6a) and the inner liner layer (9), and
the outer portion (12) is connected to the inner portion (11) and turned around a respective one of the bead cores (5) from the inside to the outside in the tire axial direction so as to further extend outward in the tire radial direction.

4. The motorcycle tire (1) according to claim 3, wherein a length in the tire radial direction of the inner portion (11) is larger than a length in the tire radial direction of the outer portion (12).

5. The motorcycle tire (1) according to any one of claims 1 to 4, wherein the insulation rubber layers (10) are formed from a rubber composition having a loss tangent tanδ at 70 degrees Celsius from 0.06 to 1.5.

6. The motorcycle tire (1) according to any one of claims 1 to 5, wherein the insulation rubber layers (10) are formed from a rubber composition having a rubber hardness at 23 degrees Celsius from 65 to 85 degrees, the rubber hardness being measured in accordance with Japanese Industrial Standards JIS-K6253 by using a type-A durometer at a standard temperature of 23 degrees Celsius ± 2 degrees Celsius.

7. The motorcycle tire (1) according to any one of claims 1 to 6, wherein the insulation rubber layers (10) are formed from a rubber composition having a breaking elongation at 23 degrees Celsius of 200% or more.

8. The motorcycle tire (1) according to claim 1, wherein a difference (r4-r3) between the radius of curvature r4 of each of the second portions and the radius of curvature r3 of the first portion is from 10.0 to 50.0 mm.

9. The motorcycle tire (1) according to any one of claims 1 to 8 further comprising a belt layer (7) disposed radially outside the carcass (6) in the tread portion (2), wherein
the first end (10e) of each of the insulation rubber layers (10) is located axially inside and radially outside a respective one of outer edges in the tire axial direction of the belt layer (7).

10. The motorcycle tire (1) according to claim 9, wherein a separation distance (Lc) in the tire axial direction between the first end (10e) of each of the insulation rubber layers (10) and a respective one of the outer edges of the belt layer (7) is from 1% to 20% of a tread width.

## Patentansprüche

1. Motorradreifen (1), umfassend:
einen Laufflächenabschnitt (2);
ein Paar Laufflächenkanten (Te), welche den Laufflächenabschnitt (2) definieren;
ein Paar Seitenwandabschnitte (3), welche sich jeweils von der jeweiligen axialen Seite des Laufflächenabschnitts (2) radial nach innen erstrecken;
ein Paar Wulstabschnitte (4), welche jeweils radial innerhalb eines jeweils zugehörigen Seitenwandabschnitts (3) vorgesehen sind;
ein Paar Wulstkerne (5), welche jeweils in einen jeweils zugehörigen Wulstabschnitt (4) eingebettet sind;
eine Karkasse (6), einschließlich einer Karkassenlage (6A) mit einem Hauptkörperabschnitt (6a), welcher sich zwischen den Wulstkernen (5) toroidal erstreckt;
eine Innerlinerschicht (9), welche auf einer Reifenhohlraumseite der Karkasse (6) angeordnet ist; und
Isoliergummischichten (10), welche jeweils zwischen dem Hauptkörperabschnitt (6a) und der Innerlinerschicht (9) in einem jeweils zugehörigen Seitenwandabschnitt (3) angeordnet sind, wobei
jede der Isoliergummischichten (10) ein erstes Ende (10e) auf der Laufflächenabschnittsseite aufweist und sich von dem ersten Ende (10e) mindestens bis zu einem jeweils zugehörigen Wulstkern (5) erstreckt,
in einem Standardzustand, in welchem der Motorradreifen (1) auf einer Standardfelge montiert, auf einen Standardinnendruck aufgepumpt und mit keiner Reifenlast belastet ist, jeder der Seitenwandabschnitte (3) eine Reifenaußenfläche (1s) und ein in der Reifenradialrichtung äußerstes Ende (t1) eines Bereichs umfasst, in welchem die Reifenaußenfläche (1s) mit der Standardfelge (R) in Kontakt steht,
in einem Reifenmeridianquerschnitt des Motorradreifens (1) in dem Standardzustand die Reifenaußenfläche (1s) jedes der Seitenwandabschnitte (3) ein Seitenprofil (3S) aufweist, welches 90 % oder mehr einer Länge ab der jeweils zugehörigen Laufflächenkante (Te) einnimmt,
die Länge ein Abstand in der Reifenradialrichtung in jeder axialen Hälfte des Motorradreifens (1) zwischen einer jeweils zugehörigen Laufflächenkante (Te) und dem jeweils zugehörigen äußersten Ende (t1) ist,
und
das Seitenprofil (3S) eine gerade Linie oder ein axial nach innen konkaver Bogen mit einem Krümmungsradius von 55 mm oder mehr ist,
wobei in jedem der Seitenwandabschnitte (3) das erste Ende (10e) der Isoliergummischicht (10) radial außerhalb einer mittleren Position in der Reifenradialrichtung des Seitenprofils (3S) angeordnet ist, wobei in dem Reifenmeridianquerschnitt des Motorradreifens (1) in dem Standardzustand der Laufflächenabschnitt (2) eine Reifenaußenfläche (1s) hat, einschließlich eines bogenförmig radial nach außen konvexen Laufflächenprofils (2S),
das Laufflächenprofil (2S) einen ersten Abschnitt (21) einschließt, welcher sich zwischen äußeren Bodenkontaktpositionen (2e) erstreckt,
die äußeren Bodenkontaktpositionen (2e) die äußersten Kontaktpositionen in der Reifenaxialrichtung sind, wenn der Motorradreifen (1) in dem Standardzustand mit einer Standardreifenlast belastet ist und mit einer Ebene bei einem Sturzwinkel von 30 Grad auf jeder Laufflächenkanten-Seite in Kontakt steht,
und
der erste Abschnitt (21) einen Krümmungsradius r3 von 40 bis 60 mm aufweist, **dadurch gekennzeichnet, dass** das Laufflächenprofil (2S) ein Paar zweiter Abschnitte (22) einschließt, welche sich jeweils zwischen einer jeweils zugehörigen äußeren Bodenkontaktposition (2e) und einer jeweils zugehörigen Laufflächenkante (Te) erstrecken, und
jeder der zweiten Abschnitte (22) einen Krümmungsradius r4 von 70 bis 100 mm aufweist.

2. Motorradreifen (1) nach Anspruch 1, wobei das erste Ende (21) jeder der Isoliergummischichten (10) in dem Laufflächenabschnitt (2) liegt.

3. Motorradreifen (1) nach einem der Ansprüche 1 und 2, wobei
jede der Isoliergummischichten (10) einen inneren Abschnitt (11) und einen äußeren Abschnitt (12) einschließt,
der innere Abschnitt (11) zwischen dem Hauptkörperabschnitt (6a) und der Innerlinerschicht (9) angeordnet ist, und
der äußere Abschnitt (12) mit dem inneren Abschnitt (11) verbunden und um einen jeweils zugehörigen Wulstkern (5) in der Reifenaxialrichtung von innen nach außen umgeschlagen ist, um sich weiter in der Reifenradialrichtung nach außen zu erstrecken.

4. Motorradreifen (1) nach Anspruch 3, wobei eine Länge in der Reifenradialrichtung des inneren Abschnitts (11) größer als eine Länge in der Reifenradialrichtung des äußeren Abschnitts (12) ist.

5. Motorradreifen (1) nach einem der Ansprüche 1 bis 4, wobei die Isoliergummischichten (10) aus einer Gummizusammensetzung gebildet sind, welche einen Verlusttangens tanδ bei 70 Grad Celsius von 0,06 bis 1,5 aufweist.

6. Motorradreifen (1) nach einem der Ansprüche 1 bis 5, wobei die Isoliergummischichten (10) aus einer Gummizusammensetzung gebildet sind, welche eine Gummihärte bei 23 Grad Celsius von 65 bis 85 Grad aufweist, wobei die Gummihärte gemäß japanischer Industriestandards JIS-K6253 unter Verwendung eines Typ-A-Durometers bei einer Standardtemperatur von 23 Grad Celsius + 2 Grad Celsius gemessen wird.

7. Motorradreifen (1) nach einem der Ansprüche 1 bis 6, wobei die Isoliergummischichten (10) aus einer Gummizusammensetzung gebildet sind, welche eine Bruchdehnung bei 23 Grad Celsius von 200 % oder mehr aufweisen.

8. Motorradreifen (1) nach Anspruch 1, wobei eine Differenz (r4-r3) zwischen dem Krümmungsradius r4 jedes der zweiten Abschnitte und dem Krümmungsradius r3 des ersten Abschnitts 10,0 bis 50,0 mm beträgt.

9. Motorradreifen (1) nach einem der Ansprüche 1 bis 8, ferner umfassend eine Gürtelschicht (7), welche radial außerhalb der Karkasse (6) in dem Laufflächenabschnitt (2) angeordnet ist, wobei das erste Ende (10e) jeder der Isoliergummischichten (10) axial innerhalb und radial außerhalb einer jeweils zugehörigen in der Reifenaxialrichtung äußeren Kante der Gürtelschicht (7) liegt.

10. Motorradreifen (1) nach Anspruch 9, wobei ein Trennabstand (Lc) in der Reifenaxialrichtung zwischen dem ersten Ende (10e) jeder der Isoliergummischichten (10) und einer jeweils zugehörigen äußeren Kante der Gürtelschicht (7) 1 % bis 20 % einer Laufflächenbreite beträgt.

## Revendications

1. Pneu de moto (1) comprenant :
une partie de bande de roulement (2) ;
une paire de bords de bande de roulement (Te) définissant la partie de bande de roulement (2) ;
une paire de parties de flanc (3), chacune s'étendant radialement vers l'intérieur à partir du côté axial respectif de la partie de bande de roulement (2) ;
une paire de parties de talon (4), chacune disposée radialement à l'intérieur de l'une des parties de flanc (3) respective ;
une paire de tringles (5), chacune incorporée dans l'une des parties de talon (4) respective ;
une carcasse (6) incluant un pli de carcasse (6A) présentant une partie de corps principal (6a) s'étendant entre les tringles (5) de manière toroïdale ;
une couche de gomme intérieure (9) agencée sur un côté cavité interne de pneu de la carcasse (6) ; et
des couches de caoutchouc isolant (10), chacune disposée entre la partie de corps principal (6a) et la couche de gomme intérieure (9) dans l'une des parties de flanc (3) respective, dans lequel
chacune des couches de caoutchouc isolant (10) présente une première extrémité (10e) du côté partie de bande de roulement et s'étend de la première extrémité (10e) à au moins l'une des tringles (5) respective,
dans un état standard dans lequel le pneu de moto (1) est monté sur une jante standard, gonflé à une pression interne standard et chargé sans charge de pneu, chacune des parties de flanc (3) inclut une surface extérieure de pneu (1s) et une extrémité la plus extérieure (t1) dans la direction radiale de pneu d'une zone où la surface extérieure de pneu (1s) est en contact avec la jante standard (R),
en coupe méridienne de pneu du pneu de moto (1) dans l'état standard, la surface extérieure de pneu (1s) de chacune des parties de flanc (3) présente un profil latéral (3S) occupant 90 % ou plus d'une longueur à partir de l'un des bords de bande de roulement (Te) respectif,
la longueur est une distance en direction radiale de pneu dans chaque moitié axiale du pneu de moto (1) entre l'un des bords de bande de roulement (Te) respectif et l'extrémité la plus extérieure (t1) respective, et
le profil latéral (3S) est une ligne linéaire ou un arc concave axialement vers l'intérieur et présentant un rayon de courbure supérieur ou égal à 55 mm,
dans lequel, dans chacune des parties de flanc (3), la première extrémité (10e) de la couche de caoutchouc isolant (10) est positionnée radialement en dehors d'une position centrale en direction radiale de pneu du profil latéral (3S), dans lequel en coupe méridienne de pneu du pneu de moto (1) dans l'état standard, la partie de bande de roulement (2) présente une surface extérieure de pneu (1s) incluant un profil de bande de roulement (2S) convexe radialement vers l'extérieur, dans une forme arquée,
le profil de bande de roulement (2S) inclut une première partie (21) s'étendant entre des positions de contact au sol externes (2e),
les positions de contact au sol externes (2e) sont les positions de contact les plus externes dans la direction axiale de pneu lorsque le pneu de moto (1), dans l'état standard, est chargé avec une charge de pneu standard et est en contact avec un plan selon un angle de carrossage de 30 degrés de chaque côté bord de bande de roulement, et
la première partie (21) présente un rayon de courbure r3 de 40 à 60 mm, **caractérisé en ce que**
le profil de bande de roulement (2S) inclut une paire de secondes parties (22), chacune s'étendant entre l'une des positions de contact au sol externes (2e) respective et l'un des bords de bande de roulement (Te) respectif, et
chacune des secondes parties (22) présente un rayon de courbure r4 de 70 à 100 mm.

2. Pneu de moto (1) selon la revendication 1, dans lequel la première extrémité (21) de chacune des couches de caoutchouc isolant (10) est située dans la partie de bande de roulement (2).

3. Pneu de moto (1) selon l'une quelconque des revendications 1 et 2, dans lequel chacune des couches de caoutchouc isolant (10) inclut une partie interne (11) et une partie externe (12),
la partie interne (11) est agencée entre la partie de corps principal (6a) et la couche de gomme intérieure (9), et
la partie externe (12) est reliée à la partie interne (11) et tournée autour de l'une des tringles (5) respective, de l'intérieur vers l'extérieur dans la direction axiale de pneu, de manière à s'étendre davantage vers l'extérieur dans la direction radiale de pneu.

4. Pneu de moto (1) selon la revendication 3, dans lequel une longueur dans la direction radiale de pneu de la partie interne (11) est supérieure à une longueur dans la direction radiale de pneu de la partie externe (12).

5. Pneu de moto (1) selon l'une quelconque des revendications 1 à 4, dans lequel les couches de caoutchouc isolant (10) sont formées à partir d'une composition de caoutchouc présentant une tangente de perte tanδ à 70 degrés Celsius de 0,06 à 1,5.

6. Pneu de moto (1) selon l'une quelconque des revendications 1 à 5, dans lequel les couches de caoutchouc isolant (10) sont formées à partir d'une composition de caoutchouc présentant une dureté de caoutchouc à 23 degrés Celsius de 65 à 85 degrés, la dureté de caoutchouc étant mesurée conformément aux normes industrielles japonaises JIS-K6253 en utilisant un duromètre de type A à une température standard de 23 degrés Celsius ± 2 degrés Celsius.

7. Pneu de moto (1) selon l'une quelconque des revendications 1 à 6, dans lequel les couches de caoutchouc isolant (10) sont formées à partir d'une composition de caoutchouc présentant un allongement à la rupture à 23 degrés Celsius supérieur ou égal à 200 %.

8. Pneu de moto (1) selon la revendication 1, dans lequel une différence (r4-r3) entre le rayon de courbure r4 de chacune des secondes parties et le rayon de courbure r3 de la première partie est de 10,0 à 50,0 mm.

9. Pneu de moto (1) selon l'une quelconque des revendications 1 à 8 comprenant en outre une couche de nappe (7) disposée radialement à l'extérieur de la carcasse (6) dans la partie de bande de roulement (2), dans lequel
la première extrémité (10e) de chacune des couches de caoutchouc isolant (10) est située axialement à l'intérieur et radialement à l'extérieur de l'un des bords extérieurs respectif dans la direction axiale de pneu de la couche de nappe (7).

10. Pneu de moto (1) selon la revendication 9, dans lequel une distance de séparation (Lc) dans la direction axiale de pneu entre la première extrémité (10e) de chacune des couches de caoutchouc isolant (10) et l'un des bords extérieurs respectif de la couche de nappe (7) représente de 1 % à 20 % d'une largeur de bande de roulement.
